(19) **Europäisches Patentamt**

**European Patent Office**

**Office européen des brevets**

(11) **EP 0 851 338 B1**

(12) **EUROPEAN PATENT SPECIFICATION**

(45) Date of publication and mention
of the grant of the patent:
**15.01.2003 Bulletin 2003/03**

(51) Int Cl.⁷: $G06F\ 3/00$, $G06F\ 3/12$

(21) Application number: **97310724.6**

(22) Date of filing: **05.12.1997**

(54) **Optimum printing speed adjustment**

Optimale Druckgeschwindigkeits-Einstellung

Ajustement optimal de la vitesse d'impression

(84) Designated Contracting States:
**DE FR GB**

(30) Priority: **27.12.1996 KR 9674197**

(43) Date of publication of application:
**01.07.1998 Bulletin 1998/27**

(73) Proprietor: **Samsung Electronics Co., Ltd.
Suwon-city, Kyungki-do (KR)**

(72) Inventor: **Kim, Sung-jae, 609-1605, Woosung APT
Sungnam, Kyungki-do (KR)**

(74) Representative: **Tunstall, Christopher Stephen
Harrison Goddard Foote,
Fountain Precinct,
Leopold Street
Sheffield S1 2QD (GB)**

(56) References cited:
**EP-A- 0 598 513**      **US-A- 4 661 857**

## Description

BACKGROUND OF THE INVENTION

The present invention relates to a method for optimising printing speed.

Conventionally, the printing speed of a printer system is hindered by the time required to perform a print environment recognition operation, such as the time required for warming up and initializing, before performing the printing operation.

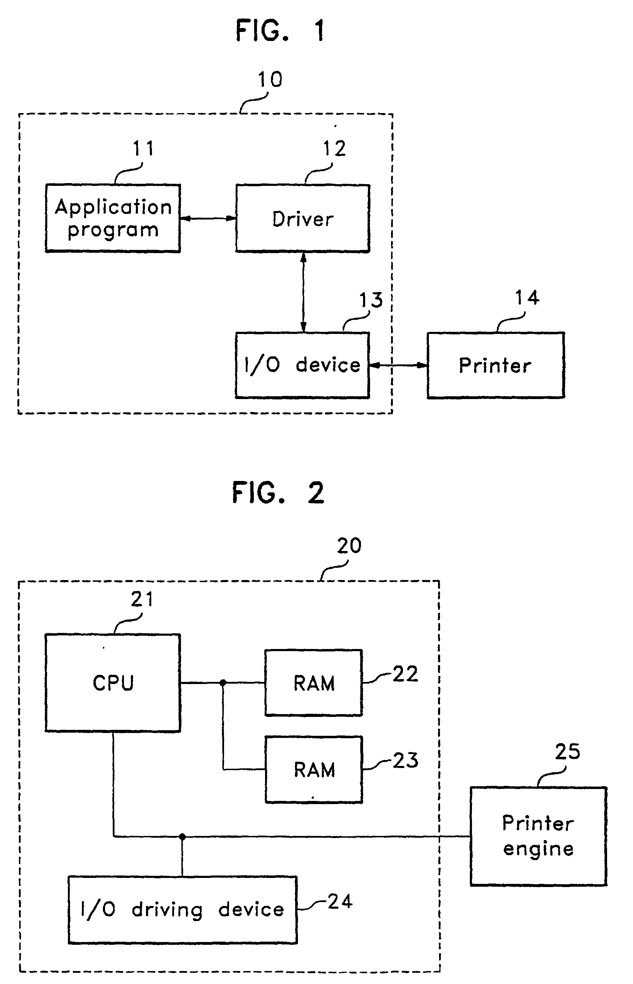

FIG. 1 is a block diagram illustrating a conventional print environment. As shown in this FIG., the print environment includes an application program 11, a printer driver 12 for converting the print data from the application program 11 into instructions which the printer can recognize, an input/output (I/O) device 13 for transmitting the converted data and a printer 14 which is connected to the I/O device and prints data corresponding to one page by interpreting data transmitted after being converted.

FIG. 2 is a block diagram illustrating a conventional laser printer. As shown in this FIG., the laser printer includes a control unit 20 for decoding the print data transmitted from the host computer 10 and controlling the printing operation and a printer engine 25 for performing the print operation under the control of the control unit 20. The control unit 20 consists of a central processing unit (CPU) 21, RAM 22, ROM 23 and an input/output (I/O) driving device.

The printing operation of the conventional laser printer having the above-described structure will now be explained. First, the document created by the application program 11 is converted into instructions which the printer 14 can recognize by the printer driver 12 provided in the host computer. After that, the converted instructions are transmitted to a serial port or a parallel port of the printer 14 through the I/O device 13 of the host computer 10. The printer 14 decodes the transmitted instructions, i.e. print data, and it converts the data corresponding to one page into a bitmap format which the printer engine 25 can recognize, then transmitting a print signal to the printer engine 25.

The printer engine 25 recognizes the current print environment to allow printing in optimum conditions and determines the fixing temperature of a developing machine according to the print environment conditions (such as temperature, humidity, etc.). Afterwards, the printer engine 25 fixes a toner of the developing machine onto a print medium by the electric pressure using a driving circuit. At this time, after the printer has enabled the printer engine 25 to race to allow the proper environment conditions to be recognized a proper environment, the actual printing operation is begun. In order words, it is necessary to warm up the printer engine 25.

Accordingly, to perform the environment recognition operation, as the printer needs to enable the printer engine 25 to race before starting the printing operation, the time at which printing begins is delayed by an amount depending upon the time it takes to perform the environment recognition operation by the printer engine 25, thus decreasing the printing speed to below the actual speed of the printer engine. Moreover, when multiple pages need to be printed one by one, since the printing environment must be recognized whenever printing is performed, the print speed seems to be very slow to users.

When continuously printing multiple pages, since the print environment which has previously been recognized is reused, the decrease in printing speed is less pronounced. However, as the documents to be printed become more complicated and the amount of the data to be transmitted for each page becomes larger, the printer engine 25 can be suspended for each page to be printed or it can be suspended due to the amount of data per page, as the input buffer of the printer is finite. The result, as it is necessary to have the time for performing the environment recognition operation, is that the printing speed is again decreased.

SUMMARY OF THE INVENTION

Therefore, it is an objective of the present invention for to allow a printer to perform a printing operation depending on the speed of its own printer engine, by reducing the time required for recognizing the print environment of the printer engine.

Accordingly, the present invention provides a method of printing data from a host on a printer comprising transmitting the data from the host to the printer and commencing a printing environment recognition operation in the printer during such data transmission.

Preferably, the method comprises:

> calculating the length of time required to transmit the data from the host to the printer according to a predetermined rule; and
> commencing the printing environment recognition operation before the expiry of the said length of time.

The said length of time may be calculated in the host and transmitted to the printer before the data is transmitted.

Preferably, the said data is one unit of print data which has been converted into data having one or more such units of a predetermined size. Each such unit may be one page of data. The said length of time may be calculated by dividing the said predetermined size by the data transmission speed between the host and the printer.

The present invention also provides a host/printer combination in which:

> the host comprises means for calculating the length of time required to transmit data to the printer according to a predetermined rule and means for transmitting the said length of time and then the data to the printer; and

the printer is adapted to commence a printing environment recognition operation in the printer before the expiry of the said length of time.

BRIEF DESCRIPTION OF THE DRAWINGS

The present invention will now be described by way of example with reference to the accompanying drawings in which:

    FIG. 1 is a block diagram illustrating a conventional print environment;
    FIG. 2 is a block diagram illustrating a conventional laser printer;
    FIG. 3 shows the format of data indicative of the data size of one page;
    FIG. 4 is a flowchart of the method of processing the print data in a printer driver of a host computer according to the present invention;
    FIG. 5 is a flowchart of the method of performing a preprocessing print according to the present invention; and
    FIG. 6 is a flowchart of the process of controlling an engine signal transmittal according to the present invention.

DETAILED DESCRIPTION OF THE PREFERRED EMBODIMENT

If a user wishes to print data from an application program 11, a printer driver 12 of a host computer 10 converts the data to be printed into instructions which a printer 14 can recognize and transmits the instruction to the printer 14. The printer driver 12 can recognize the overall data size of one page of printer instructions. An input/output (I/O) device 13 of the host computer 10 is selected and the print data, i.e. the instructions converted by the printer driver 12, are transmitted to the printer 14.

In this case, as the transmission speed is already known, it is possible for the printer driver 12 or the printer to determine the time required to transmit data corresponding to one page from the host computer to the printer. This can be achieved by dividing the data size of one page of printer instructions by the transmission speed, as follows:

$$\text{Transmission Time} = \frac{\text{Page Data Size}}{\text{Transmission Speed}}.$$

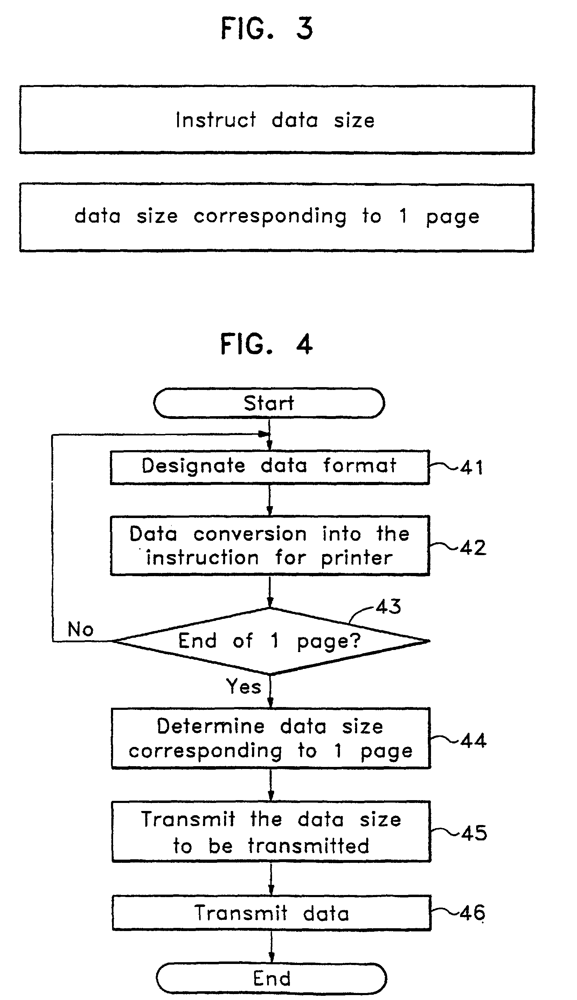

In the present invention using the above equation, when the printing operation is performed starting from the host computer 10, the printer driver 12 calculates the size of the data, i.e. the data size of one page of converted printer instructions. Differently from the conventional technologies in which the printer performs the print environment recognition operation of the printer engine 25 upon receiving a print signal, the printer 14 of the present invention calculates the transmission time by the above-identified equation using the received size value of the instruction and the established value of the transmission speed and performs the print recognition operation earlier by as much as the calculated transmission time. For this purpose, an instruction which informs the printer of the size of the data corresponding to one page shown in FIG. 3 is added to the conventional printing instructions.

The printing process will be explained, with reference to the drawings. First, when a document created by a user in the host computer is printed to the printer 14 attached to the host computer 10, the printer driver 12 receives the data to be printed from the application program 11 and processes the print data, as shown in the flowchart of FIG. 4. In other words, the printer driver 12 designates the format of the data to be printed and converts the data into instructions which the printer 14 can recognize (Steps 41 and 42). Such conversion of the print data into printer instructions is repeated until data corresponding to one page are all converted (Step 43).

After the data conversion corresponding to one page is completed, the size of the converted data is determined before the converted data is transmitted (Step 44). After determining the size of the data to transmit, the printer driver 12 converts the converted data corresponding to one page into the format shown in FIG. 3 and transmits them to the printer 14 through the I/O device 13 (Step 45). After that, the printer driver 12 transmits the converted data to be printed to the printer 14 through the I/O device 13 (Step 46).

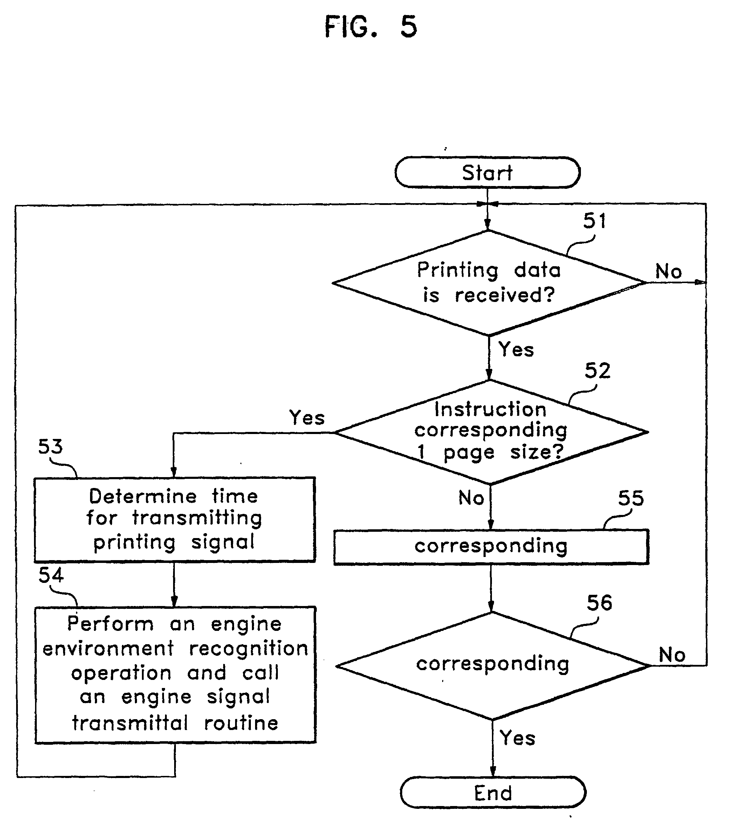

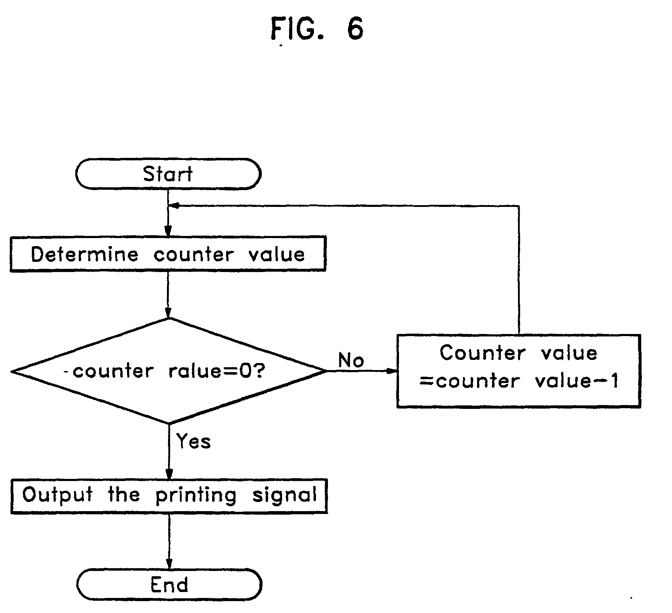

As shown in FIG. 5, the printer 14 performs the preprocessing printing. Here, when the data to be printed is transmitted from the host computer 10, it is determined whether the data comprises printer instructions corresponding in size to one page (Steps 51 and 52). As a result of that determination, when the transmitted data does not correspond to one page, general data which is transmitted is continuously rendered (Step 55). When the transmitted data corresponds to one page, the transmission time is calculated from the above equation using the value of the page size included in the page size instruction and the established transmission speed between the host computer and the printer. For use in the engine signal transmittal routine shown in FIG. 6, the calculated transmission time is stored in a timer (not illustrated in the drawing) provided in the printer 14 (Step 53). Thus, the transmission time is calculated by the printer driver 12 of the host computer and received by the printer 14.

After determining the data transmission time, the engine signal transmittal routine of FIG. 6 is called so that the printer engine 25 can perform the print environment recognition operation (Step 54). In effect, the printer engine 25 is instructed to perform the print environment recognition operation earlier by much as the transmission time.

Referring to FIG. 6, the operation of the engine signal transmittal routine will be explained. A counting operation is performed during the time corresponding to the transmission time stored in the timer. If the value of the counter accords with the transmission time, the printing signal is transmitted to the printer engine 25.

As mentioned above, the rendering of the transmitted general data is repeatedly performed until the transmitted data correspond to one page (Step 56). At this time, as shown in FIG. 6, when the value of the counter accords with the transmission time (that is, when the value of the counter becomes zero), the printing signal is transmitted to the printer engine 25 and the print data which have been rendered until then are printed. In other words, during the counting operation performed by the timer, the printer engine is warmed up and the printer receives the data to be printed and performs rendering. The printer warms up the printer engine, and, after the transmission time elapses, the processed data is transmitted to the printer engine to perform the printing operation.

As described above, to overcome the problem that the printing time is delayed due to the print environment recognition operation of the printer engine being performed when the printing signal is received by the printer engine, the host computer informs the printer of the data transmission time and enables the printer engine to perform the print environment recognition operation earlier. The result, as the delayed time is removed, is that the printing operation can be performed more quickly.

**Claims**

1. A method of printing data from a host on a printer comprising transmitting the data from the host to the printer and commencing a printing environment recognition operation in the printer during such data transmission.

2. A method of printing data from a host on a printer according to claim 1 comprising:

   calculating the length of time required to transmit the data from the host to the printer according to a predetermined rule; and
   commencing the printing environment recognition operation before the expiry of the said length of time.

3. A method of printing data from a host on a printer according to claim 2 in which the said length of time is calculated in the host and transmitted to the printer before the data is transmitted.

4. A method of printing data from a host on a printer according to any preceding claim in which the said data is one unit of print data which has been converted into data having one or more such units of a predetermined size.

5. A method of printing data from a host on a printer according to claim 4 in which each such unit is one page of data.

6. A method of printing data from a host on a printer according to claim 4 or claim 5 in which the said length of time is calculated by dividing the said predetermined size by the data transmission speed between the host and the printer.

7. A method of printing data from a host on a printer as described herein with reference to and as illustrated in FIGs. 3 et seq. of the accompanying drawings.

8. A host/printer combination in which:

   the host comprises means for calculating the length of time required to transmit data to the printer according to a predetermined rule and means for transmitting the said length of time and then the data to the printer; and
   the printer is adapted to commence a printing environment recognition operation before the expiry of the said length of time.

9. A host/printer combination as described herein with reference to FIGs. 3 et seq. of the accompanying drawings.

**Patentansprüche**

1. Verfahren zum Drucken von Daten von einem Host auf einen Drucker, mit dem Übertragen der Daten von dem Host zu dem Drucker und Einleiten eines Druckumgebungserkennungsvorgangs in dem Drucker während dieser Datenübertragung.

2. Verfahren zum Drucken von Daten von einem Host auf einen Drucker gemäß Anspruch 1, mit:

   Berechnen der Zeitdauer, die erforderlich ist, um die Daten von dem Host zu dem Drucker zu übertragen, gemäß einer vorbestimmten Regel; und
   Einleiten des Druckumgebungserkennungsvorgangs vor dem Ablauf dieser Zeitdauer.

3. Verfahren zum Drucken von Daten von einem Host auf einen Drucker gemäß Anspruch 2, bei dem die Zeitdauer in dem Host berechnet und zu dem Druk-

ker übertragen wird, bevor die Daten übertragen werden.

4. Verfahren zum Drucken von Daten von einem Host auf einen Drucker gemäß einem der vorhergehenden Ansprüche, bei dem die Daten eine Einheit von Druckdaten sind, die in Daten konvertiert sind, die ein oder mehrere solcher Einheiten einer vorbestimmten Größe haben.

5. Verfahren zum Drucken von Daten von einem Host auf einen Drucker gemäß Anspruch 4, bei dem jede dieser Einheiten eine Seite aus Daten ist.

6. Verfahren zum Drucken von Daten von einem Host auf einen Drucker gemäß Anspruch 4 oder Anspruch 5, bei dem die Zeitdauer berechnet wird, indem die vorbestimmte Größe durch die Datenübertragungsgeschwindigkeit zwischen dem Host und dem Drucker dividiert wird.

7. Verfahren zum Drucken von Daten von einem Host auf einen Drucker, wie es hier unter Bezugnahme auf Figuren 3 und Folgende der beiliegenden Zeichnungen beschrieben und in diesen dargestellt ist.

8. Host/Drucker-Kombination, wobei:

der Host Einrichtungen zum Berechnen der Zeitdauer, die erforderlich ist, um Daten zu dem Drucker zu übertragen, gemäß einer vorbestimmten Regel sowie Einrichtungen zum Übertragen der Zeitdauer und dann der Daten zu dem Drucker enthält; und
der Drucker ausgestaltet ist, einen Druckumgebungserkennungsvorgang vor Ablauf dieser Zeitdauer einzuleiten.

9. Host/Drucker-Kombination, wie sie hier unter Bezugnahme auf Figuren 3 und Folgende der beiliegenden Zeichnungen beschrieben.

**Revendications**

1. Procédé d'impression de données, venant d'un hôte, sur une imprimante, comprenant la transmission des données depuis l'hôte à l'imprimante et le début d'une opération d'identification d'environnement d'impression dans l'imprimante, durant une telle transmission de données.

2. Procédé d'impression de données venant d'un hôte sur une imprimante selon la revendication 1, comprenant :

le calcul de la longueur de temps nécessaire pour transmettre les données de l'hôte à l'imprimante selon une règle prédéterminée ; et
le commencement de l'opération d'identification d'environnement d'impression avant l'expiration de ladite longueur de temps.

3. Procédé d'impression de données venant d'un hôte sur une imprimante selon la revendication 2, dans lequel ladite longueur de temps est calculée dans l'hôte et transmise à l'imprimante, avant que les données soient transmises.

4. Procédé d'impression de données venant d'un hôte sur une imprimante selon l'une quelconque des revendications précédentes, dans lequel lesdites données sont une unité de données à imprimer, ayant été converties en des données ayant une ou plusieurs de ces unités d'une taille prédéterminée.

5. Procédé d'impression de données venant d'un hôte sur une imprimante selon la revendication 4, dans lequel chaque dite unité est une page de données.

6. Procédé d'impression de données venant d'un hôte sur une imprimante selon la revendication 4 ou la revendication 5, dans lequel ladite longueur de temps est calculée par division de ladite taille prédéterminée, par la vitesse de transmission de données, entre l'hôte et l'imprimante.

7. Procédé d'impression de données venant d'un hôte sur une imprimante tel que décrit ici, en référence à et tel qu'illustré sur les FIGS. 3 et suivantes des dessins annexés.

8. Une combinaison hôte/imprimante dans laquelle :

l'hôte comprend des moyens pour calculer la longueur de temps nécessaire pour transmettre des données à l'imprimante selon une règle prédéterminée et des moyens pour transmettre ladite longueur de temps, puis les données, à l'imprimante ; et
l'imprimante est adaptée pour commencer une opération d'identification d'environnement d'impression avant l'expiration de ladite longueur de temps.

9. Une combinaison hôte/imprimante tel que décrit ici en référence aux FIGS. 3 et suivantes, des dessins annexés.

# FIG. 1

# FIG. 2

# FIG. 3

| Instruct data size |
|---|

| data size corresponding to 1 page |
|---|

# FIG. 4

Start

Designate data format — 41

Data conversion into the instruction for printer — 42

End of 1 page? — 43

No

Yes

Determine data size corresponding to 1 page — 44

Transmit the data size to be transmitted — 45

Transmit data — 46

End

# FIG. 5

```
                              ┌─────────┐
                              │  Start  │
                              └─────────┘
                                   │
                                   ▼               51
                          ╱────────────────╲
                         ╱   Printing data   ╲      No
                         ╲   is received?    ╱──────────►
                          ╲────────────────╱
                                   │ Yes
                                   ▼               52
                          ╱────────────────╲
                   Yes   ╱    Instruction    ╲
            ┌───────────╱    corresponding    ╲
            │           ╲    1 page size?     ╱
     53     │            ╲────────────────╱
            ▼                      │ No            55
  ┌──────────────────┐            ▼
  │  Determine time  │   ┌──────────────────┐
  │ for transmitting │   │   corresponding  │
  │ printing signal  │   └──────────────────┘
  └──────────────────┘            │
     54     │                     ▼            56
            ▼            ╱────────────────╲
  ┌──────────────────┐  ╱                  ╲      No
  │ Perform an engine│  ╲   corresponding  ╱──────────►
  │environment recog-│   ╲────────────────╱
  │nition operation  │            │ Yes
  │and call an engine│            ▼
  │signal transmittal│       ┌─────────┐
  │     routine      │       │   End   │
  └──────────────────┘       └─────────┘
```

# FIG. 6

```
          ┌─────────────┐
          │    Start     │
          └──────┬──────┘
                 │  ◄──────────────────────────┐
                 ▼                               │
   ┌───────────────────────────┐                │
   │  Determine counter value   │                │
   └─────────────┬─────────────┘                │
                 │                               │
                 ▼                               │
              ╱────────╲         No    ┌──────────────────────┐
            ╱  counter   ╲ ──────────► │    Counter value       │
            ╲  ralue=0?  ╱             │  =counter value−1      │
              ╲────────╱               └──────────────────────┘
                 │ Yes
                 ▼
   ┌───────────────────────────┐
   │  Output the printing signal │
   └─────────────┬─────────────┘
                 │
                 ▼
          ┌─────────────┐
          │     End      │
          └─────────────┘
```